# EUROPEAN PATENT APPLICATION

(11) **EP 3 654 124 A1**
(43) Date of publication of application: **20.05.2020**
(21) Application number: 17832897.7
(22) Date of filing: 14.07.2017
(51) Int. Cl.: G05B 23/02

(54) **VEHICLE DIAGNOSTIC METHOD, TERMINAL DEVICE, AND COMPUTER READABLE STORAGE MEDIUM**

(71) Applicant: Shenzhen Launch Tech Co., Ltd., Shenzhen, Guangdong 518000 (CN)
(72) Inventor: LIU, Jun, Shenzhen Guangdong 518000 (CN); ZHAO, Xiaobing, Shenzhen Guangdong 518000 (CN)
(74) Representative: MERH-IP Matias Erny Reichl Hoffmann Patentanwälte PartG mbB
(86) International application number: PCT/CN2017/092887
(87) International publication number: WO 2019/010685

(57) **Abstract**

A vehicle diagnostic method, a terminal device, and a computer readable storage medium are provided. The method comprises: obtaining vehicle characteristic parameters; establishing a communication connection with a diagnostic socket of an OBD of the vehicle; performing a diagnosis for the vehicle according to the vehicle characteristic parameters, and obtaining a diagnostic result; when the diagnostic result includes a fault code, searching for maintenance suggestion corresponding to the fault code; and outputting the maintenance suggestion. By the aforesaid method, a cost of labor force can be greatly reduced.

## Description

### THCHNICAL FIELD

The present invention relates to the technical field of vehicle diagnosis, and more particularly, relates to a vehicle diagnostic method, a terminal device and a computer readable storage medium.

### BACKGROUND

With an improvement of society living standards, vehicles have come into more and more families. However, vehicles may be abraded during use. In order to prevent accidents from happening, fault diagnosis needs to be performed periodically for vehicles.

In various fault diagnostic methods in the prior art, generally, a vehicle is detected by a maintenance personal with the use of a vehicle detection terminal, and a maintenance suggestion is provided according to a vehicle detection result. However, with the development of the society, the cost of labor force becomes higher and higher, but enterprises care about the cost. Therefore, if it is necessary for the maintenance personnel to participate in fault diagnosis for every time, an exorbitant cost of labor force will be resulted.

### TECHNICAL PROBLEM

Embodiments of the present invention provide a vehicle diagnostic method, a terminal device and a computer readable storage medium, which aim at solving a technical problem in the existing vehicle diagnostic methods that a maintenance personnel needs to participate in fault diagnosis for every time and thereby results in too high cost of labor force.

### TECHNICAL SOLUTION

In a first aspect, an embodiment of the present invention provides a vehicle diagnostic method, wherein the vehicle diagnostic method comprises:
obtaining vehicle characteristic parameters;
establishing a communication connection with a diagnostic socket of an OBD of the vehicle;
performing a diagnosis for the vehicle according to the vehicle characteristic parameters, and obtaining a diagnostic result;
when the diagnostic result includes a fault code, searching for maintenance suggestion corresponding to the fault code; and
outputting the maintenance suggestion.

Selectively, the step of obtaining vehicle characteristic parameters comprises:
detecting whether the vehicle is located in a predetermined area; and
obtaining the vehicle characteristic parameters when the vehicle is located in the predetermined area.

Selectively, the step of obtaining vehicle characteristic parameters comprises:
obtaining the vehicle characteristic parameters by image scanning, the vehicle characteristic parameters include at least one of a license plate of the vehicle, a color of the vehicle, an overall shape of the vehicle, and a vehicle identification number (VIN) of the vehicle.

Selectively, before the step of establishing a communication connection with a diagnostic socket of an OBD of the vehicle, the method further comprises:
judging whether the communication connection with the diagnostic socket of the OBD is established in a predetermined time interval; and
when the communication connection with the diagnostic socket of the OBD is not established in the predetermined time interval, sending out a prompt for accessing to the diagnostic socket of the OBD.

Selectively, when the fault code includes a fault code corresponding to a positional fault of a crankshaft or a camshaft, the step of outputting the maintenance suggestion specifically comprises:
outputting maintenance suggestion indicating that a misplacement of a relative position between the crankshaft and the camshaft may exceed one gear tooth, a camshaft position sensor or an electronic circuit thereof may malfunction, a crankshaft position sensor or an electric circuit thereof may malfunction, a motor velocity sensor may malfunction, machine oil may be contaminated, an electromagnetic valve of a variable camshaft may get stuck; and/or
when the fault code includes a fault code corresponding to a performance of a pressure control electromagnetic valve B or a location where the pressure control electromagnetic valve B gets stuck and be closed, the step of outputting the maintenance suggestion specifically comprises:
   outputting maintenance suggestion indicating that a pressure control electromagnetic valve control circuit or a plug-in connector or the electromagnetic valve itself may malfunction; and/or
   when the fault code includes a fault code corresponding to misfire of a random air cylinder or a plurality of air cylinders, the step of outputting the maintenance suggestion specifically comprises:
      outputting maintenance suggestion indicating that one or a plurality of air cylinder(s) may misfire, there may be a mechanical fault in the air cylinder, a fuel metering may malfunction, a fuel oil pressure may be too high or too low, an evaporation emission system may malfunction, an exhaust gas recirculation valve guard may be opened, a vacuum leak may occur in a positive crankcase ventilation system, an ignition system may malfunction, an air flow meter may malfunction, a liquid level of fuel oil in an oil tank may be too low.

In a second aspect, an embodiment of the present invention provides a terminal device comprising a memorizer, a processor, and computer procedure codes stored in the memorizer and executable by the processor, wherein the processor invokes the computer procedure codes stored in the memorizer so as to perform following steps:
obtaining vehicle characteristic parameters;
establishing a communication connection with a diagnostic socket of an OBD of the vehicle;
performing a diagnosis for the vehicle according to the vehicle characteristic parameters, and obtaining a diagnostic result;
when the diagnostic result includes a fault code, searching for maintenance suggestion corresponding to the fault code; and
outputting the maintenance suggestion.

Selectively, the processor performs the step of obtaining vehicle characteristic parameters in the following specific method:
detecting whether the vehicle is located in a predetermined area; and
when the vehicle is located in the predetermined area, obtaining the vehicle characteristic parameters.

Selectively, the processor performs the step of obtaining vehicle characteristic parameters in the following specific method:
obtaining the vehicle characteristic parameters by image scanning, the vehicle characteristic parameters include at least one of a license plate of the vehicle, a color of the vehicle, an overall shape of the vehicle, and a vehicle identification number (VIN) of the vehicle.

Selectively, before the processor performs the step of establishing a communication connection with a diagnostic socket of an OBD of the vehicle, the processor also performs following steps:
judging whether the communication connection with the diagnostic socket of the OBD is established in a predetermined time interval; and
when the communication connection with the diagnostic socket of the OBD isn't established in the predetermined time interval, sending out a prompt for accessing to the diagnostic socket of the OBD.

Selectively, when the fault code includes a fault code corresponding to a positional fault of a crankshaft or a camshaft, the processor performs the step of outputting the maintenance suggestion in the following specific method:
outputting maintenance suggestion indicating that a misplacement of a relative position between the crankshaft and the camshaft may exceed one gear tooth, a camshaft position sensor or an electronic circuit thereof may malfunction, a crankshaft position sensor or an electric circuit thereof may malfunction, a motor velocity sensor may malfunction, machine oil may be contaminated, an electromagnetic valve of a variable camshaft may get stuck; and/or
when the fault code includes a fault code corresponding to a performance of a pressure control electromagnetic valve B or a location where the pressure control electromagnetic valve B gets stuck and be closed, the processor performs the step of outputting the maintenance suggestion in the following specific method:
   outputting maintenance suggestion indicating that a pressure control electromagnetic valve control circuit or a plug-in connector or the electromagnetic valve itself may malfunction; and/or
   when the fault code include a fault codes corresponding to misfire of a random air cylinder or a plurality of air cylinders, the processor performs the step of outputting the maintenance suggestion in the following specific method:
      outputting maintenance suggestion indicating that one or a plurality of air cylinder(s) may misfire, there may be a mechanical fault in the air cylinder(s), a fuel metering may malfunction, a fuel oil pressure may be too high or too low, an evaporation emission system may malfunction, an exhaust gas recirculation valve guard may be opened, a vacuum leak may occur in a positive crankcase ventilation system, an ignition system may malfunction, an air flow meter may malfunction, a liquid level of fuel oil in an oil tank may be too low.

In a third aspect, the embodiments of the present invention provide a computer readable storage medium comprising at least one computer readable instruction which is executable by a processor to perform following steps:
obtaining vehicle characteristic parameters;
establishing a communication connection with a diagnostic socket of an OBD of the vehicle;
performing a diagnosis for the vehicle according to the vehicle characteristic parameters, and obtaining a diagnostic result;
when the diagnostic result includes a fault code, searching for maintenance suggestion corresponding to the fault code; and
outputting the maintenance suggestion.

Selectively, the step of obtaining vehicle characteristic parameters comprises:
detecting whether the vehicle is located in a predetermined area; and
when the vehicle is located in the predetermined area, obtaining the vehicle characteristic parameters.

Selectively, the step of obtaining vehicle characteristic parameters comprises:
obtaining the vehicle characteristic parameters by image scanning, the vehicle characteristic parameters include at least one of a license plate of the vehicle, a color of the vehicle, an overall shape of the vehicle, and a vehicle identification number (VIN) of the vehicle.

Selectively, before the step of establishing a communication connection with a diagnostic socket of an OBD of the vehicle, the method further comprises:
judging whether the communication connection with the diagnostic socket of the OBD is established in a predetermined time interval; and
when the communication connection with the diagnostic socket of the OBD is not established in the predetermined time interval, sending out a prompt for accessing to the diagnostic socket of the OBD .

Selectively, when the fault code includes a fault code corresponding to a positional fault of a crankshaft or a camshaft, the step of outputting the maintenance suggestion specifically comprises:
outputting maintenance suggestion indicating that a misplacement of a relative position between the crankshaft and the camshaft may exceed one gear tooth, a camshaft position sensor or an electronic circuit thereof may malfunction, a crankshaft position sensor or an electric circuit thereof may malfunction, a motor velocity sensor may malfunction, machine oil may be contaminated, an electromagnetic valve of a variable camshaft may get stuck; and/or
when the fault code includes a fault code corresponding to a performance of a pressure control electromagnetic valve B or a location where the pressure control electromagnetic valve B gets stuck and be closed, the step of outputting the maintenance suggestion specifically comprises:
   outputting maintenance suggestion indicating that a pressure control electromagnetic valve control circuit or a plug-in connector or the electromagnetic valve itself may malfunction; and/or
   when the fault code includes a fault code corresponding to misfire of a random air cylinder or a plurality of air cylinders, the step of outputting the maintenance suggestion specifically comprises:
      outputting maintenance suggestion indicating that one or a plurality of air cylinder(s) may misfire, there may be a mechanical fault in the air cylinder, a fuel metering may malfunction, a fuel oil pressure may be too high or too low, an evaporation emission system may malfunction, an exhaust gas recirculation valve guard may be opened, a vacuum leak may occur in a positive crankcase ventilation system, an ignition system may malfunction, an air flow meter may malfunction, a liquid level of fuel oil in an oil tank may be too low.

### ADVANTAGEOUS EFFECTS

In the embodiments of the present invention, since a vehicle to be diagnosed can be automatically detected, therefore, a full participation of the maintenance personnel is unnecessary, such that the cost of labor force can be greatly reduced. Moreover, since maintenance suggestions are outputted, therefore, both users and maintenance personnel are provided with a direction of maintenance, so that a speed of maintenance of the vehicle can be greatly improved.

### BRIEF DESCRIPTION OF THE DRAWINGS

FIG.1 illustrates a flow chart of a vehicle diagnostic method provided by a first embodiment of the present invention;
FIG. 2 illustrates a schematic view of a connection between a server and a vehicle detection terminal provided by the first embodiment of the present invention;
FIG. 3 illustrates a schematic view of a terminal device provided by a second embodiment of the present invention.

### DETAILED DESCRIPTION OF THE PREFERRED EMBODIMENTS

In order to make the purpose, the technical solution and the advantages of the present invention be clearer and more understandable, the present invention will be further described in detail below with reference to accompanying figures and embodiments. It should be understood that the specific embodiments described herein are merely intended to illustrate but not to limit the present invention.

In order to explain the technical solution of the present invention, herein, the present invention is described with reference to specific embodiments:

### Embodiment I:

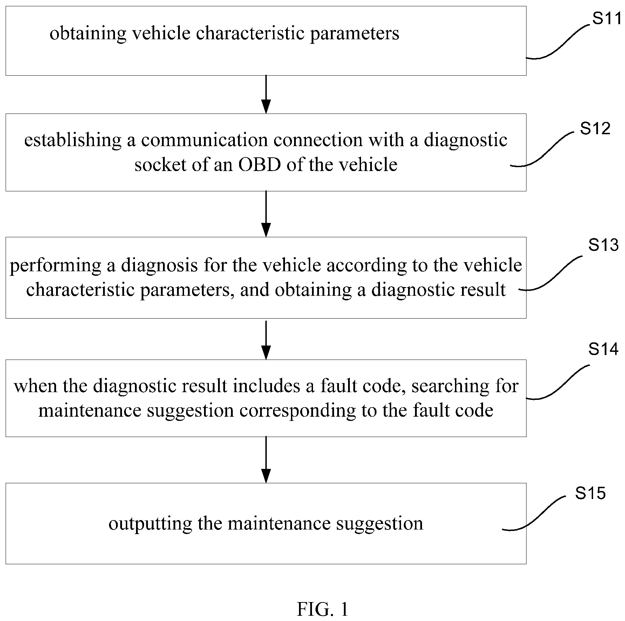

FIG. 1 illustrates a flow chart of a vehicle diagnostic method provided by a first embodiment of the present invention, which is described in detail below:
in a step S11, obtaining vehicle characteristic parameters.

Specifically, a vehicle detection terminal is used for obtaining the vehicle characteristic parameters, the vehicle detection terminal can be mainly a terminal having a diagnostic function, such as a computer, a PAD, etc.

Selectively, the step S11 comprises:
A1, detecting whether the vehicle is positioned in a predetermined area. Wherein, the predetermined area is defined as an image scanned area that can be reachable by the vehicle detection terminal. Specifically, when the vehicle detection terminal is immobilized, the vehicle is driven to a fixed area where the vehicle detection terminal can implement a comprehensive image scanning to be detected; when the vehicle detection terminal is movable, by moving the vehicle detection terminal in a closing way or in a leaving way, such that the immobilized vehicle can be located at the fixed area where the vehicle detection terminal can implement the comprehensive image scanning.
A2, obtaining the vehicle characteristic parameters when the vehicle is located in the predetermined area.

Selectively, the step S11 comprises:
obtaining the vehicle characteristic parameters by image scanning, the vehicle characteristic parameters comprises at least one of a license plate of the vehicle, a color of the vehicle, an overall shape of the vehicle, and a vehicle identification number (VIN) of the vehicle. Wherein the image scanning described herein can be implemented by at least one device(s) including a camera, an infrared scanner, a laser scanner, a radar scanner device, etc. It needs to be noted that, there may be one or more than one of the aforesaid same device or different devices that serve(s) to implement image scanning function, specifically, the number of the device(s) is set according to an actual need.

In step S12, establishing communication connection with a diagnostic socket of an OBD (On-Board Diagnostics) of the vehicle.

Selectively, since diagnostic sockets of OBDs of different types of vehicles are located at different positions, location data of diagnostic sockets of OBDs of different types of vehicles can be pre-stored, in this way, when the vehicle needs to be detected, a specific prompt for identifying the location of the diagnostic socket of the OBD can be provided according to the type of the vehicle, such that time spent by a driver of the vehicle on searching for the diagnostic socket of the OBD can be saved.

Selectively, before the step S 12, the method comprises:
B1, judging whether the communication connection with the diagnostic socket of the OBD of the vehicle is established in a predetermined time interval.
B2, if the communication connection with the diagnostic socket of the OBD of the vehicle is not established in the predetermined time interval, sending out a prompt for accessing to the diagnostic socket of the OBD.

Selectively, after the step S12, the method further comprises:
uploading operation condition data of the OBD of the vehicle to a server in real time, such that the server can output alarm information when it detects that the operation condition of the OBD of the vehicle is abnormal.

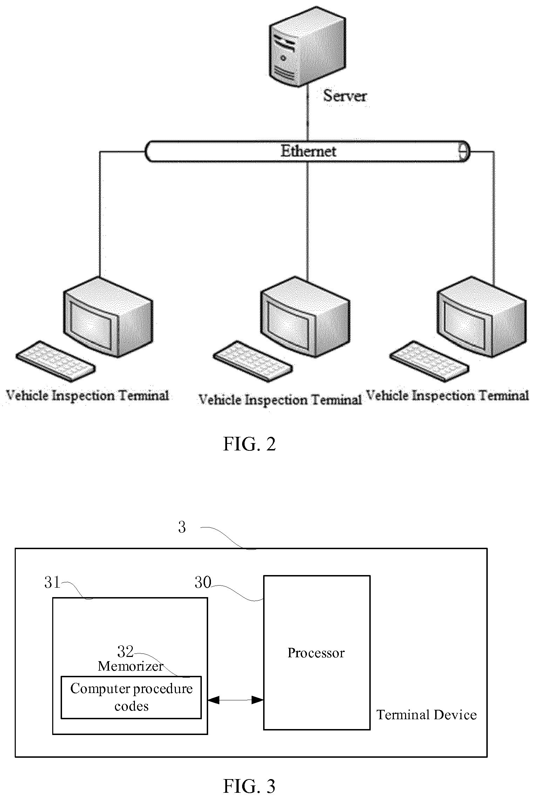

Wherein, FIG. 2 illustrates a schematic view of a connection between the server and the vehicle detection terminal.

Specifically, a service that serves to monitor the operation condition of the vehicle detection terminal is activated in the vehicle detection terminal, and then operation condition data is uploaded to the server in real time. The server also performs a service procedure that serves to monitor a condition of each vehicle detection terminal, if data of the vehicle detection terminal can't be received or there is a problem in the received data, it is considered that there is problem in the vehicle detection terminal, and the alarm information is outputted. Further, the alarm information is transmitted to designated maintenance personnel(s), such that relevant maintenance personnel(s) is/are notified to settle this problem.

In a step S13, performing a diagnosis for the vehicle according to the vehicle characteristic parameters and obtaining a diagnostic result.

Selectively, before the vehicle is diagnosed, the method comprises a step of receiving a diagnostic instruction, transmitting the diagnostic instruction to the vehicle through the diagnostic socket of the OBD so as to perform the diagnosis for the vehicle, and receiving data from the vehicle, and obtaining the diagnostic result. Specifically, the diagnostic instruction can be an instruction corresponding to a general "start to diagnose", that is, a user only needs to trigger an instruction corresponding to "start to diagnose" for one time, an automatic diagnosis for the vehicle can be automatically completed. Of course, the diagnostic instruction can also be divided into diagnostic instructions of specific locations. For example, when the diagnostic instruction is a diagnostic instruction of a crankshaft location, a diagnosis for the crankshaft location of the vehicle is automatically performed. Selectively, the user can send out the diagnostic instruction through a physical button or a virtual button displayed on a display device of the vehicle detection terminal.

Selectively, since it is usually hard for the user to understand the data sent back from the vehicle, therefore, after the data sent back from the vehicle is received, it needs to analyze the data sent from the vehicle, and then process the analyzed data to obtain the diagnostic result. Wherein, the diagnostic result herein is mainly about fault information of the vehicle. When there is a fault in the vehicle, the diagnostic result includes a fault code corresponding to the fault, when there is no fault in the vehicle, the diagnostic result includes prompt information containing no faults.

In a step S14, when the diagnostic result includes a fault code, searching for maintenance suggestion corresponding to the fault code.

Wherein, the fault code serves to be represented as a code corresponding to a fault that may be happened to the vehicle. Specifically, according to experience of a professional maintenance personnel, maintenance suggestions corresponding to different faults are pre-stored, that is, maintenance suggestions corresponding to different fault codes are pre-stored.

In a step S15, outputting the maintenance suggestion.

Specifically, different maintenance suggestions are outputted according to different faults. Specifically, a purpose of outputting the maintenance suggestion can be achieved by using the vehicle detection terminal to display the maintenance suggestion. Further, a printer can also be used to print the maintenance suggestion, thereby achieve the purpose of outputting the maintenance suggestion, it is not limited herein.

Selectively, when the fault code includes a fault code corresponding to a fault of a crankshaft location or a camshaft location, the step S15 specifically comprises:
outputting maintenance suggestion indicating that a misplacement of a relative position between the crankshaft and the camshaft may exceed one gear tooth, a camshaft position sensor or an electronic circuit thereof may malfunction, a crankshaft position sensor or an electric circuit thereof may malfunction, a motor velocity sensor may malfunction, machine oil may be contaminated, an electromagnetic valve of a variable camshaft may get stuck. Specifically, the crankshaft serves to convert an up and down movement into a rotation movement, the camshaft serves to control open and close operation of an air valve. An ECU (Electronic Control Unit) of the vehicle can continuously monitor a timing position of a variable camshaft and detect a relative location between the camshaft and the crankshaft. If a misplacement of the relative location exceeds one gear tooth, the fault code will occur. The fault can also be caused by the fault of the camshaft location sensor itself or a circuit failure of the camshaft location sensor, or by a crankshaft location sensor failure itself or a circuit failure of the crankshaft location sensor, or by a motor velocity sensor failure, or by contaminated machine oil, or by a variable camshaft electromagnetic valve that gets stuck, etc.
AND/OR
when the fault code includes a fault code corresponding to a performance of a pressure control electromagnetic value B, or a location where pressure control electromagnetic value B gets stuck and be closed, the step S15 specifically comprises:
outputting maintenance suggestion indicating that a pressure control electromagnetic valve control circuit or a plug-in connector or the electromagnetic valve itself may malfunction. Wherein, a gear shift electromagnetic valve controls a hydraulic pressure leading to a transmission clutch by opening or closing a transmission hydraulic pressure control valve, thereby controlling a disengagement or engagement of the transmission clutch, and implementing the gear shift. That is, an accurate control of hydraulic pressure force of the transmission is very important for a stable gear shift. The pressure control electromagnetic valve serves to control the pressure of transmission fluid. When the fault codes comprises the fault code corresponding to the performance of the pressure control electromagnetic valve B or the location where the pressure control electromagnetic valve B gets stuck and be closed, it means that the fault may be caused by one of components listed below: a pressure control electromagnetic control circuit, the plug-in connector or the electromagnetic valve itself. Of course, a fault of a control module of the pressure control electromagnetic valve may also lead to an occurrence of the fault code.
AND/OR,

When the fault code includes a fault code corresponding to misfire of a random air cylinder or a plurality of air cylinders, the step S15 specifically comprises:
Outputting maintenance suggestions indicating that: one or a plurality of air cylinder(s) may misfire, there may be a mechanical fault in the air cylinder(s), fuel metering may malfunction, a fuel oil pressure may be too high or too low, an evaporative emission system may malfunction, an EGR (Exhaust Gas Recirculation) valve guard may be opened, a vacuum leak may occur in a positive crankcase ventilation system, an ignition system may malfunction, an air flow meter may malfunction, a liquid level of fuel oil in an oil tank may be too low. Specifically, a misfire of an air cylinder is referred to as a phenomenon that mixed gas in the air cylinder can't be burned normally due to various reasons in a working process of the motor. If the ECU of the vehicle detects a misfire that may do damage to a catalytic converter, a fault light will flash; at this time, a motor engine should be shut down immediately. When the fault codes include a fault code corresponding to misfire of a random air cylinder or a plurality of air cylinders, it means that a plurality of air cylinders misfire, or the ECU can't determine which of the plurality of air cylinders misfire. The fault may be caused by following conditions including a mechanical fault of the air cylinder, a fuel metering fault, the fuel oil pressure that is too high or too low, a malfunction of the evaporation emission system, the open EGR valve guard, an occurrence of vacuum leak of PCV system, a malfunction of the ignition system, a malfunction of the air flow meter, the liquid level of fuel oil in the tank that is too low, etc.

Selectively, after the step S15, the method further comprises:
C1, obtaining basic data of the vehicle. Wherein, the basic data of the vehicle includes at least one among a license plate of the vehicle, a color of the vehicle, an overall shape of the vehicle, etc. Specifically, a camera device can be used to obtain the basic data of the vehicle; and
C2, uploading the basic data of the vehicle and the diagnostic result to the server. Further, it is also possible to continue to obtain information including a vehicle detection date, a VIN (Vehicle Identification Number), a vehicle model-year, a detected ECU system of the vehicle, repair suggestions and vehicle maintenance, and so on, and upload the further obtained information and the basic data of the vehicle to the server.

In a first embodiment of the present invention, the vehicle characteristic parameters are obtained, the communication connection with the diagnostic socket of the OBD of the vehicle is established, a diagnosis is performed for the vehicle according to the vehicle characteristic parameters, and a diagnostic result is obtained. When the diagnostic result includes fault code(s), maintenance suggestions corresponding to the fault code(s) is searched and outputted. Since the vehicle can be diagnosed automatically, a full participation of maintenance personal(s) is unnecessary, in this way, a cost of labor force can be greatly reduced. Moreover, since the maintenance suggestions are outputted, both the user and the maintenance personal(s) are provided with a direction of maintenance, such that a speed of maintenance of the vehicle can be greatly improved.

It should be understood that, in the embodiment of the present invention, value of sequence numbers of the aforesaid steps shouldn't be represented as order of execution sequences of the steps, execution sequence of each of the steps should be determined by functions and inherent logic of each of the steps, and shouldn't be regarded as any limitation to an implementation process of the embodiment of the present invention.

### Embodiment II:

FIG. 3 illustrates a structural view of a terminal device 3 provided by a second embodiment of the present invention that corresponds to the vehicle diagnostic method provided by the embodiment I, as shown in FIG. 3, the terminal device of embodiment II comprises a processor 30, a memorizer 31, and computer procedure codes 32 stored in the memorizer 31 and executable by the processor 30. The processor invokes the computer procedure codes 32 stored in the memorizer 31 so as to perform following steps:
obtaining vehicle characteristic parameters;
establishing a communication connection with a diagnostic socket of an OBD of the vehicle; selectively, since diagnostic sockets of OBDs of different types of vehicles are located are different positions, therefore, location data of diagnostic sockets of OBD of different types of vehicles can be pre-stored, in this way, when the vehicle needs to be detected, a specific prompt for identifying the location of the diagnostic socket of the OBD can be provided according to the type of the vehicle, such that time spent by a driver of the vehicle on searching for the diagnostic socket of the OBD can be saved;
performing a diagnosis for the vehicle according to the vehicle characteristic parameters, and obtaining a diagnostic result;
when the diagnostic result includes a fault code, searching for maintenance suggestion corresponding to the fault code; and
outputting the maintenance suggestion.

Selectively, the processor 30 performs the step of obtaining vehicle characteristic parameters in the following specific method:
detecting whether the vehicle is located in a predetermined area; wherein the predetermined area is referred to as an image scanned area reachable by the vehicle detection terminal; and
obtaining the vehicle characteristic parameters when the vehicle is located in the predetermined area.

Selectively, the processor 30 performs the step of obtaining vehicle characteristic parameters in the following specific method:
obtaining the vehicle characteristic parameters by image scanning, the vehicle characteristic parameters include at least one of a license plate of the vehicle, a color of the vehicle, an overall shape of the vehicle, and a vehicle identification number (VIN) of the vehicle. Wherein the image scanning described herein can be implemented by at least one device(s) including a camera, an infrared scanner, a laser scanner, a radar scanner device, etc. It needs to be noted that, there may be one or more than one of the aforesaid same device or different devices that serve(s) to implement image scanning function, specifically, the number of the device(s) is set according to an actual need.

Selectively, before the processor 30 performs the step of establishing a communication connection with a diagnostic socket of an OBD of the vehicle, the processor 30 also performs following steps:
judging whether the communication connection with the diagnostic socket of the OBD is established in a predetermined time interval; and
when the communication connection with the diagnostic socket of the OBD is not established in the predetermined time interval, sending out a prompt for accessing to the diagnostic socket of the OBD .

Selectively, when the fault codes include a fault code corresponding to a positional fault of a crankshaft or a camshaft, the processor 30 performs the step of outputting the maintenance suggestion in the following specific method:
outputting the maintenance suggestion indicating that a misplacement of a relative position between the crankshaft and the camshaft may exceed one gear tooth, a camshaft position sensor or an electronic circuit thereof may malfunction, a crankshaft position sensor or an electric circuit thereof may malfunction, a motor velocity sensor may malfunction, machine oil may be contaminated, and an electromagnetic valve of a variable camshaft may get stuck; and/or
when the fault code includes a fault code corresponding to a performance of a pressure control electromagnetic valve B or a location where the pressure control electromagnetic valve B gets stuck and be closed, the processor 30 performs the step of outputting the maintenance suggestion in the following specific method:
   outputting maintenance suggestion indicating that a pressure control electromagnetic valve control circuit or a plug-in connector or the electromagnetic valve itself may malfunction; and/or
   when the fault code includes a fault code corresponding to misfire of a random air cylinder or a plurality of air cylinders, the processor 30 performs the step of outputting the maintenance suggestion in the following specific method:
      outputting maintenance suggestion indicating that one or a plurality of air cylinder(s) may misfire, there may be a mechanical fault in the air cylinder(s), a fuel metering may malfunction, a fuel oil pressure may be too high or too low, an evaporation emission system may malfunction, an exhaust gas recirculation valve guard may be opened, a vacuum leak may occur in a positive crankcase ventilation system, an ignition system may malfunction, an air flow meter may malfunction, and a liquid level of fuel oil in an oil tank may be too low.

Selectively, after the processor 30 performs the step of outputting the maintenance suggestion(s), the processor 30 further performs the following steps:
obtaining basic data of the vehicle. Wherein, the basic data of the vehicle includes at least one among a license plate of the vehicle, a color of the vehicle, an overall shape of the vehicle, etc. Specifically, a camera device can be used to obtain the basic data of the vehicle; and
uploading the basic data of the vehicle and the diagnostic result to the server. Further, it is also possible to continue to obtain information including a vehicle detection date, a VIN (Vehicle Identification Number), a vehicle model-year, a detected ECU system of the vehicle, repair suggestions and vehicle maintenance, and so on, and upload the further obtained information and the basic data of the vehicle to the server.

The terminal device 3 can be a computing device such as a desktop computer, a notebook, a PDA (Personal Digital Assistant), a cloud server, and so on, these technical devices can be, in particular, a vehicle inspection device. The terminal device 3 can include but not limited to a processor 30, a memorizer 31. It can be understood by the one of ordinary skill in the art that FIG. 3 is merely a demonstration of the terminal device 3, and shouldn't be regarded as limitation to the terminal device 3. The terminal device 3 can include components more or less than that is shown in FIG. 3, or a combination of some components, or different components, for example, the terminal device 3 can also include an IO (Input and Output) device, a network access device, a bus, etc.

The so called processor can be a CPU (Central Processing Unit), or be other general purpose processor, DSP (Digital Signal Processor), ASIC (Application Specific Integrated Circuit), FPGA (Field-Programmable Gate Array), or be some other programmable logic devices, discrete gate or transistor logic devices, discrete hardware components, etc. The general purpose processor can be a microprocessor, or be any conventional processor, etc.

The memorizer 31 can be an internal storage unit of the terminal device, such as a hard disk or a memory of the terminal device 3. The memorizer 31 can also be an external storage device of the terminal device 3, such as a plug-in type hard disk equipped in the terminal device 3, a SMC (Smart Media Card), SD (Secure Digital) card, flash card, etc. Further, the memorizer 31 can not only include the internal storage unit of the terminal device 3 but also include the external storage device. The memorizer serves to store the computer procedures and other procedures and data required by the terminal device 3. The memorizer 31 can also be used to temporarily store data which has been outputted or is about to be outputted.

### Embodiment III:

Corresponding to the vehicle diagnostic method provided by embodiment I, one embodiment of the present invention further provides a computer readable storage medium, which stores at least one computer readable instruction(s) executable by the processor to implement following operations:
obtaining vehicle characteristic parameters;
establishing a communication connection with a diagnostic socket of an OBD of the vehicle;
performing a diagnosis for the vehicle according to the vehicle characteristic parameters, and obtaining a diagnostic result;
searching for maintenance suggestion corresponding to the fault code when the diagnostic result includes a fault code; and
outputting the maintenance suggestion.

Selectively, the step of obtaining vehicle characteristic parameters comprises:
detecting whether the vehicle is located in a predetermined area; and
obtaining the vehicle characteristic parameters when the vehicle is located in the predetermined area.

Selectively, the step of obtaining vehicle characteristic parameters comprises:
obtaining the vehicle characteristic parameters by image scanning, the vehicle characteristic parameters include at least one of a license plate of the vehicle, a color of the vehicle, an overall shape of the vehicle, and a vehicle identification number (VIN) of the vehicle.

Selectively, before the step of establishing a communication connection with a diagnostic socket of an OBD of the vehicle, judging whether the communication connection with the diagnostic socket of the OBD is established in a predetermined time interval; and
when the communication connection with the diagnostic socket of the OBD is not established in the predetermined time interval, sending out a prompt for accessing to the diagnostic socket of the OBD .

Selectively, when the fault code includes a fault code corresponding to a positional fault of a crankshaft or a camshaft, the step of outputting the maintenance suggestion specifically comprises:
outputting maintenance suggestion indicating that a misplacement of a relative position between the crankshaft and the camshaft may exceed one gear tooth, a camshaft position sensor or an electronic circuit thereof may malfunction, a crankshaft position sensor or an electric circuit thereof may malfunction, a motor velocity sensor may malfunction, machine oil may be contaminated, an electromagnetic valve of a variable camshaft may get stuck; and/or
when the fault code includes a fault code corresponding to a performance of a pressure control electromagnetic valve B or a location where the pressure control electromagnetic valve B gets stuck and be closed, the step of outputting the maintenance suggestion specifically comprises:
   outputting maintenance suggestion indicating that a pressure control electromagnetic valve control circuit or a plug-in connector or the electromagnetic valve itself may malfunction; and/or
   when the fault code includes a fault code corresponding to misfire of a random air cylinder or a plurality of air cylinders, the step of outputting the maintenance suggestion specifically comprises:
      outputting maintenance suggestion indicating that one or a plurality of air cylinder(s) may misfire, there may be a mechanical fault in the air cylinder, a fuel metering may malfunction, a fuel oil pressure may be too high or too low, an evaporation emission system may malfunction, an exhaust gas recirculation valve guard may be opened, a vacuum leak may occur in a positive crankcase ventilation system, an ignition system may malfunction, an air flow meter may malfunction, a liquid level of fuel oil in an oil tank may be too low.

In the aforesaid embodiments I-III, a description of each of the embodiments has its emphasis respectively, regarding the part that is not detailedly described or disclosed in some embodiments, please refer to relevant descriptions in other embodiments.

One of ordinary skill in the art can realize that, each of units and algorithm steps in each of examples described with reference to the embodiments disclosed in the present invention can be realized by electronic hardwares, or by a combination of computer software and electronic hardware. Whether these functions are performed by way of hardware or software depends on a specific application of a technical solution and a design constraint condition. Aiming at each of the specific applications, professionals can use different methods to realize functions described in each of the specific applications, but this realization shouldn't be regarded as going beyond the protection scope of the present invention.

In the embodiments provided by the present invention, it should be understood that the apparatus and the method disclosed can be achieved in other ways. For example, the aforementioned apparatus/terminal device embodiments are schematic merely, for example, the division of the aforementioned units is just a kind of logic function division, some other divisions can be used in actual implementations, for example, a plurality of units or components can be combined or integrated into another system, or some features can be ignored or unexecuted. Another point, the interacted coupling or directly coupling or communication connection displayed or discussed can be indirect coupling or communication connection via some ports, apparatus or units, and the form of the connection can be electrical, mechanical, or other types.

The units illustrated as separate components can be physically separated or physically inseparable, components displayed as units can be or not be physical units, that is, these components can be located at a same place, or be distributed at a plurality of network units. According to an actual need, a part or all of the units can be selected to realize the purpose of the solution in this embodiment.

In addition, each of the functional units in each of the embodiments of the present invention can be integrated into one processing unit, or each of the functional units can exist alone physically, or two or more than two of the aforesaid functional units can be integrated into one unit. The aforesaid integrated units can either be realized in the form of hardware, or be realized in the form of software functional units.

When the integrated modules/units are realized in the form of software functional units, and are sold or used as independent products, they can be stored in a computer readable storage medium. Based on this understanding, some or all steps for implementing the method in the aforesaid embodiments can also be accomplished by using computer procedures to instruct relevant hardwares, the computer procedures can be stored in a computer readable storage medium, when the computer procedures are executed by a processor, steps in each of the aforesaid method embodiments can be realized. Wherein, the computer procedures comprise computer procedure codes which can be in the form of source code, object codes, executable documents, or some intermediate form, etc. The computer readable storage medium can include any entity or apparatus that can carry the computer procedure codes, record medium, a USB (Universal Serial Bus) flash disk, a mobile hard disk drive, a magnetic disk, a compact disk, a computer storage, a ROM (Read only Memory), a RAM (Random Access Memory), electric carrier signals, telecommunication signals, and software distribution medium, etc. It needs to be noted that, the contents contained in the computer readable storage medium can be increased or decreased according to the requirement of legislation and patent practice within a judicial district, for example, in some judicial districts, according to legislation and patent practice, the computer readable storage medium doesn't include electric carrier signals and telecommunication signals.

The aforesaid embodiments described above are merely intended to illustrate but not to limit the technical solutions of the present invention. Although the present invention has been described in detail with reference to the aforesaid embodiments, it should be understood by the one of ordinary skill in the art that, the technical solutions described in each of the aforesaid embodiments can still be modified, or equivalent substitutions can be done for some technical features in the aforesaid embodiments, these modifications or substitutions won't cause an essence of a corresponding technical solution to break away from the spirit and the range of technical solutions in each of the embodiments of the present invention, and these modifications or substitutions should be included in the protection scope of the present invention.

## Claims

1. A vehicle diagnostic method comprising:
obtaining vehicle characteristic parameters;
establishing a communication connection with a diagnostic socket of an OBD of the vehicle;
performing a diagnosis for the vehicle according to the vehicle characteristic parameters, and obtaining a diagnostic result;
when the diagnostic result includes a fault code, searching for maintenance suggestion corresponding to the fault code; and
outputting the maintenance suggestion.

2. The vehicle diagnostic method according to claim 1, wherein the step of obtaining vehicle characteristic parameters comprises:
detecting whether the vehicle is located in a predetermined area; and
obtaining the vehicle characteristic parameters when the vehicle is located in the predetermined area.

3. The vehicle diagnostic method according to claim 1, wherein the step of obtaining vehicle characteristic parameters comprises:
obtaining the vehicle characteristic parameters by image scanning, the vehicle characteristic parameters include at least one of a license plate of the vehicle, a color of the vehicle, an overall shape of the vehicle, and a vehicle identification number of the vehicle.

4. The vehicle diagnostic method according to claim 1, before the step of establishing a communication connection with a diagnostic socket of an OBD of the vehicle, the method further comprises:
judging whether the communication connection with the diagnostic socket of the OBD is established in a predetermined time interval; and
when the communication connection with the diagnostic socket of the OBD is not established in the predetermined time interval, sending out a prompt for accessing to the diagnostic socket of the OBD.

5. The vehicle diagnostic method according to any one of claims 1-4, wherein:
when the fault code includes a fault code corresponding to a positional fault of a crankshaft or a camshaft, the step of outputting the maintenance suggestion specifically comprises:
outputting maintenance suggestion indicating that a misplacement of a relative position between the crankshaft and the camshaft may exceed one gear tooth, a camshaft position sensor or an electronic circuit thereof may malfunction, a crankshaft position sensor or an electric circuit thereof may malfunction, a motor velocity sensor may malfunction, machine oil may be contaminated, an electromagnetic valve of a variable camshaft may get stuck; and/or
when the fault codes include a fault code corresponding to a performance of a pressure control electromagnetic valve B or a location where the pressure control electromagnetic valve B gets stuck and be closed, the step of outputting the maintenance suggestion specifically comprises:
outputting the maintenance suggestion indicating that a pressure control electromagnetic valve control circuit or a plug-in connector or the electromagnetic valve itself may malfunction; and/or
when the fault code includes a fault code corresponding to misfire of a random air cylinder or a plurality of air cylinders, the step of outputting the maintenance suggestion specifically comprises:
outputting maintenance suggestion indicating that one or a plurality of air cylinder(s) may misfire, there may be a mechanical fault in the air cylinder, a fuel metering may malfunction, a fuel oil pressure may be too high or too low, an evaporation emission system may malfunction, an exhaust gas recirculation valve guard may be opened, a vacuum leak may occur in a positive crankcase ventilation system, an ignition system may malfunction, an air flow meter may malfunction, a liquid level of fuel oil in an oil tank may be too low.

6. A terminal device comprising a memorizer, a processor, and computer procedure codes stored in the memorizer and executable by the processor, wherein the processor invokes the computer procedure codes stored in the memorizer so as to perform following steps:
obtaining vehicle characteristic parameters;
establishing a communication connection with a diagnostic socket of an OBD of the vehicle;
performing a diagnosis for the vehicle according to the vehicle characteristic parameters, and obtaining a diagnostic result;
when the diagnostic result includes a fault code, searching for maintenance suggestion corresponding to the fault code; and
outputting the maintenance suggestion.

7. The terminal device according to claim 6, wherein the processor performs the step of obtaining vehicle characteristic parameters specifically comprises:
detecting whether the vehicle is located in a predetermined area; and
obtaining the vehicle characteristic parameters when the vehicle is located in the predetermined area.

8. The terminal device according to claim 6, wherein the processor performs the step of obtaining vehicle characteristic parameters specifically comprises:
obtaining the vehicle characteristic parameters by image scanning, the vehicle characteristic parameters include at least one of a license plate of the vehicle, a color of the vehicle, an overall shape of the vehicle, and a vehicle identification number of the vehicle.

9. The vehicle diagnostic method according to claim 6, before the processor performs the step of establishing a communication connection with a diagnostic socket of an OBD of the vehicle, the processor also performs following steps:
judging whether the communication connection with the diagnostic socket of the OBD is established in a predetermined time interval; and
when the communication connection with the diagnostic socket of the OBD isn't established in the predetermined time interval, sending out a prompt for accessing to the diagnostic socket of the OBD.

10. The terminal device according to any one of claims 6-9, wherein:
when the fault codes include a fault code corresponding to a positional fault of a crankshaft or a camshaft, the processor performs the step of outputting the maintenance suggestion specifically comprises:
outputting the maintenance suggestion indicating that a misplacement of a relative position between the crankshaft and the camshaft may exceed one gear tooth, a camshaft position sensor or an electronic circuit thereof may malfunction, a crankshaft position sensor or an electric circuit thereof may malfunction, a motor velocity sensor may malfunction, machine oil may be contaminated, an electromagnetic valve of a variable camshaft may get stuck; and/or
when the fault codes include a fault code corresponding to a performance of a pressure control electromagnetic valve B or a location where the pressure control electromagnetic valve B gets stuck and be closed, the step of outputting the maintenance suggestion specifically comprises:
outputting the maintenance suggestion indicating that a pressure control electromagnetic valve control circuit or a plug-in connector or the electromagnetic valve itself may malfunction; and/or
when the fault code includes a fault code corresponding to misfire of a random air cylinder or a plurality of air cylinders, the processor performs the step of outputting the maintenance suggestion specifically comprises:
outputting maintenance suggestion indicating that one or a plurality of air cylinder(s) may misfire, there may be a mechanical fault in the air cylinder(s), a fuel metering may malfunction, a fuel oil pressure may be too high or too low, an evaporation emission system may malfunction, an exhaust gas recirculation valve guard may be opened, a vacuum leak may occur in a positive crankcase ventilation system, an ignition system may malfunction, an air flow meter may malfunction, a liquid level of fuel oil in an oil tank may be too low.

11. A computer readable storage medium comprising at least one computer readable instruction which is executable by a processor to perform following steps:
obtaining vehicle characteristic parameters;
establishing a communication connection with a diagnostic socket of an OBD of the vehicle;
performing a diagnosis for the vehicle according to the vehicle characteristic parameters, and obtaining a diagnostic result;
when the diagnostic result includes a fault code, searching for maintenance suggestion corresponding to the fault code; and
outputting the maintenance suggestion.

12. The computer readable storage medium according to claim 11, wherein the step of obtaining vehicle characteristic parameters comprises:
detecting whether the vehicle is located in a predetermined area; and
obtaining the vehicle characteristic parameters when the vehicle is located in the predetermined area.

13. The computer readable storage medium according to claim 11, wherein the step of obtaining vehicle characteristic parameters comprises:
obtaining the vehicle characteristic parameters by image scanning, the vehicle characteristic parameters include at least one of a license plate of the vehicle, a color of the vehicle, an overall shape of the vehicle, and a vehicle identification number of the vehicle.

14. The computer readable storage medium according to claim 11, wherein before the step of establishing a communication connection with a diagnostic socket of an OBD of the vehicle, the method comprises:
judging whether the communication connection with the diagnostic socket of the OBD is established in a predetermined time interval; and
when the communication connection with the diagnostic socket of the OBD is not established in the predetermined time interval, sending out a prompt for accessing to the diagnostic socket of the OBD .

15. The computer readable storage medium according to any one of claims 11-14, wherein:
when the fault code includes a fault code corresponding to a positional fault of a crankshaft or a camshaft, the step of outputting the maintenance suggestion specifically comprises:
outputting the maintenance suggestion indicating that a misplacement of a relative position between the crankshaft and the camshaft may exceed one gear tooth, a camshaft position sensor or an electronic circuit thereof may malfunction, a crankshaft position sensor or an electric circuit thereof may malfunction, a motor velocity sensor may malfunction, machine oil may be contaminated, an electromagnetic valve of a variable camshaft may get stuck; and/or
when the fault codes include a fault code corresponding to a performance of a pressure control electromagnetic valve B or a location where the pressure control electromagnetic valve B gets stuck and be closed, the step of outputting the maintenance suggestion specifically comprises:
outputting the maintenance suggestion indicating that a pressure control electromagnetic valve control circuit or a plug-in connector or the electromagnetic valve itself may malfunction; and/or
when the fault code includes a fault code corresponding to misfire of a random air cylinder or a plurality of air cylinders, the step of outputting the maintenance suggestion specifically comprises:
outputting maintenance suggestion indicating that one or a plurality of air cylinder(s) may misfire, there may be a mechanical fault in the air cylinder, a fuel metering may malfunction, a fuel oil pressure may be too high or too low, an evaporation emission system may malfunction, an exhaust gas recirculation valve guard may be opened, a vacuum leak may occur in a positive crankcase ventilation system, an ignition system may malfunction, an air flow meter may malfunction, a liquid level of fuel oil in an oil tank may be too low.
